# EUROPÄISCHE PATENTSCHRIFT

(11) **EP 1 107 042 B1**
(45) Veröffentlichungstag und Bekanntmachung des Hinweises auf die Patenterteilung: **08.02.2006**
(21) Anmeldenummer: 00124016.7
(22) Anmeldetag: 04.11.2000
(51) Int. Cl.: G02C 1/02

(54) **Brille**
Spectacles
Lunettes

(30) Priorität: 02.12.1999 DE 19958005
(43) Veröffentlichungstag der Anmeldung: 13.06.2001
(73) Patentinhaber: Weber, Rainer, 53773 Hennef (DE)
(72) Erfinder: Weber, Rainer, 53773 Hennef (DE)
(74) Vertreter: Harwardt, Günther

(56) Entgegenhaltungen:
- EP-A- 0 611 978
- EP-A- 0 724 178
- EP-A- 0 805 369
- WO-A-00/26716
- WO-A-98/40778
- US-A- 5 781 270
- US-A- 5 997 137

## Beschreibung

Die Erfindung betrifft eine Brille mit
- zwei Gläsem,
- einem die beiden Gläser verbindenden Befestigungselement in Form eines Bnickenetements,
- je Glas einem Befestigungselement in Form eines Halteelements und einem an das Halteelement (5) angeschlossenen Bügel,

wobei zumindest ein Befestigungselement einen Zapfenabschnitt und zum Zapfenabschnitt einen Halteabschnitt aufweist und
wobei die Gläser oder mit den Gläsern verbundene Randfassungsetemente für das Befestigungselement eine Durchgangsbohrung zur Aufnahme des Zapfenabschnittes aufweisen.

Solche Brillen sind aus EP 0 611 978 A1, WO 98/40778 und WO96/30799 A1 bekannt In diesen ist jeweils eine Brillenfassung beschrieben, bei der die beiden Bügel und die Nasenbrücke durch ein flexibles, U-förmig aus Draht gebogenes Befestigungselement mit den Gläsern verbunden sind. Ein Schenkel des U-förmigen Befestigungselementes durchgreift eine Bohrung nahe dem Rand des zugehörigen Glases. Der parallel zum ersten Schenkel verlaufende zweite Schenkel wird durch die elastische Vorspannung der Schenkel zueinander gegen die Außenkontur bzw. in eine Vertiefung in der Außenkontur des Glases gepreßt. Das Glas wird hierdurch eingespannt.

In der WO 98145748 A1 ist eine Brillenfassung gezeigt, bei der die Fixierung der beiden Bügel an der Nasenbrücke jeweils zum Glas durch Drahtabschnitte erfolgt, welche einen in eine Bohrung nahe dem Rand des Glases eintretenden Zapfenabschnitt und einen über einen Bogen mit diesem verbundenen U-Bogen aufweist. Der erste Schenkel des U-Bogens liegt mit dem Zapfenabschnitt in einer Ebene und der zweite Schenkel spannt mit dem ersten Schenkel eine Ebene auf, die zu der zweiten zwischen dem Zapfenabschnitt und dem ersten Schenkel aufgespannten Ebene senkrecht steht. Die Schenkel des U-Bogens liegen am Außenrand des Glases an.

Der DE 32 39 699 A1 sind Haltespangen, die U-förmig sind und das Brillenglas partiell beidseitig umfassen, zu entnehmen. Die Haltespangen bestehen aus zwei Teilen, die außerhalb des Glases durch Schrauben gegeneinander verspannt sind und das Glas zwischen sich einspannen.

Ferner sind einteilige Brillenfassungen bekannt, bei denen die die Bügel tragenden Halteelemente und das Brückenelement zwischen den beiden Gläsern unlösbarer Bestandteil der Randfassung für die Gläser sind. Des weiteren sind Teifrandfassungen bekannt, bei denen eine Festlegung an den Gläsern mittels Klebeverbindung erfolgt. Es sind Verbindungen bekannt, bei denen das Glas jeweils durchbohrt ist und ein Zapfen des Bügelelementes bzw. des Halteelementes durch eine Durchgangsbohrung des Glases hindurchgeführt und in dieser verklebt ist. Eine solche Ausgestaltung der Brillenfassung gibt wenig Flexibilität hinsichtlich der Gestaltungsmöglichkeit einer Brille. Bei den Brillen ohne Randfassungen für die Gläser ergeben sich Stabilitätsprobleme hinsichtlich der Verbindungen.

Aufgabe der vorliegenden Erfindung ist es, eine eingangs genannte Brille bereitzustellen, die an die jeweiligen Vorstellungen der Erwerber aus einem Baukasten von Bestandteilen hinsichtlich Halteelementen, Bügeln und Brückenetementen sowie Fassung und Teiffassung zusammenstellbar sind, die eine einfache Verbindung der Teile erlauben und darüber hinaus eine Verbindung insbesondere zwischen dem Brückenelement und den Gläsern bzw. zugehörigen Randfassungselementen und dem Halteelement und den Gläsern bzw. zugehörigen Randfassungselementen erlauben, die eine günstige Stabilität bei einfacher Montierbarkeit ergeben. Darüber hinaus soll eine Verbindung möglich sein, die bei von außen einwirkenden Kräften so flexibel ist, daß Beschädigungen weitestgehend vermieden werden.

Die Aufgabe wird dadurch gelöst, daß der Zapfenabschnitt den zugehörigen Halteabschnitt mit Abstand kreuzend oder eine gedachte Verlängerung des zugehörigen Halteabschnitts schneidend verlaufend angeordnet ist und daß die Gläser oder mit den Gläsern verbundene Randfassungselemente einen vom Randbereich des Glases oder des Randfassungselementes ausgehenden, korrespondierend zum zugehörigen Halteabschnitt angeordneten und zur Aufnahme desselben dienenden Schlitz aufweisen.

Von Vorteil bei diesen Ausbildungsvarianten ist, daß auf einfache Weise eine Verbindung zwischen den Befestigungselementen und den Gläsern bzw. einer Randfassung oder Teilrandfassung erzielt werden kann, so daß auch modische Elemente genutzt werden können bzw. aus einem Baukasten individuell Gestaltungselemente zusammengestellt werden können. Insbesondere bei einer Ausgestaltung mit einer Brille ohne Randfassung der Gläser ergibt sich eine extrem leichte Brille die angenehm zu tragen ist. Die Verbindungen sind darüber hinaus aufgrund des Eingriffs des Halteabschnittes in einen Schlitz bei vertikalen Belastungen äußerst stabil, und bei Belastungen in einer senkrechten Ebene dazu äußerst flexibel.

Für alle erfindungsgemäßen Gestaltungen ist vorgesehen, daß das Halteelement aus einem Draht hergestellt ist und der Zapfenabschnitt und der Halteabschnitt durch entsprechend gebogene Abschnitte des Drahtes gebildet sind.

Daraus ergibt sich eine einfache und leichte Bauweise. Dies gilt auch für das Brückenelement, das ebenfalls aus einem gebogenen Draht bestehen kann, wobei die Zapfenabschnitte und Halteabschnitte durch entsprechend gebogene Abschnitte des Drahtes dargestellt sind. Neben der einfachen Verbindung zum Glas bzw. zu einem Randfassungselement hin wird auch eine einfache Verbindung des Halteelementes mit dem Bügel durch ein Scharnier erzielt, da beispielsweise bei der Herstellung des Halteelementes aus Draht, dieser entsprechend gebogen werden kann, um eine Öse des Scharnieres darzustellen. Bügel und Halteelement können jedoch auch einstückig sein.

Es ist jedoch auch eine Gestaltung des Halteelementes als Formteil, sei es als Druckgußteil oder Spritzgußteil aus Kunststoff, möglich, wobei diesem der zweite Zapfenabschnitt und ein Halteabschnitt in Form eines Steges angeformt sind.

Eine besonders günstige Anordnung hinsichtlich der Verbindung ergibt sich in Ausgestaltung der Erfindung dadurch, daß jeder Schlitz derart verläuft, daß eine gedachte Verlängerung des jeweiligen Schlitzes über das zugehörige Glas oder die zugehörigen Randfassungselemente hinaus zum anderen Glas oder zu dessen Randfassungselementen hin, diese schneidet oder kreuzt.

Vorzugsweise sind alle Schlitze parallel zueinander angeordnet.

Eine besonders günstige Verbindung zwischen der Durchgangsbohrung und einem Zapfenabschnitt wird dadurch erreicht, daß zwischen beiden eine Hülse angeordnet ist. Dies ist insbesondere bei einer Zuordnung zu Gläsern ohne Randfassung günstig. Es ist jedoch auch eine unmittelbare Festlegung des Zapfenabschnittes in der zugehörigen Durchgangsbohrung mittels eines Klebers möglich. Für den Fall, daß eine Hülse vorgesehen ist, ist diese in der zugehörigen Bohrung entweder mit Preßsitz oder mittels eines Klebers festlegbar. Auch der erste bzw. zweite Zapfenabschnitt können in der zugehörigen Hülse zusätzlich mittels eines Klebers festgelegt werden. Es ist jedoch darüber hinaus auch möglich, dem Zapfenabschnitt beispielsweise eine Verdickung anzuformen, so daß diese nach dem Hindurchführen des Zapfenabschittes durch die Hülse, diese hintergreift. Es können aber auch zusätzliche kraftschlußerhöhende Oberflächengestaltungen am Zapfenabschitt vorgesehen sein.

Vorzugsweise wird ein Runddraht gewählt, obwohl auch andere Drahtquerschnitte möglich sind. Besonders günstig ist, wenn ein hochflexibles Material, beispielsweise Titan oder ein Titan ent-haltendes Material benutzt wird. Um die Gestaltungsvarianten zu erhöhen, kann der Draht zumindest partiell beschichtet oder umhüllt oder mit unterschiedlichen Farbaufträgen versehen sein.

Eine optisch günstige Gestaltung ergibt sich bei der Verwendung eines Drahtes, wenn der Zapfenabschnitt von der Vorderseite des Glases oder des Randfassungselementes in die zugehörige Durchgangsbohrung eingeführt ist. Der Abschnitt zwischen dem Halteabschnitt und dem Zapfenabschnitt ist sichtbar. Die Gesamtgestaltung ergibt ein ansprechendes Design. Es ist auch ein Einführen des Zapfenabschnittes von der Rückseite des Glases oder des Randfassungselementes möglich.

Drei bevorzugte Ausführungsbeispiele der Erfindung sind in der Zeichnung schematisch dargestellt.

Es zeigt
- Figur 1: eine perspektivische Darstellung einer Brille, bei der das Brückenelement und die Halteelemente mit den Bügeln aus Draht hergestellt sind und unmittelbar, daß heißt ohne Randfassung, mit den Gläsern verbunden sind,
- Figur 2: drei verschiedene Ansichten bzw. Teilschnitte der nasenseitigen Verbindung des Glases des zum rech- ten Auge gehörenden Glases mit dem Brückenelement,
- Figur 3: die bügelseitige Verbindung des Glases für das rechte Auge in drei verschiedenen Ansichten bzw. Teilschnitten,
- Figur 4: eine Ausführungsform, bei dem bügelseitig und nasenseitig jeweils zwischen dem Halteelement bzw. Brückenelement und dem Glas eine Teilrandfassung in Form von Randfassungselementen vorgesehen ist,
- Figur 5: eine Teilansicht einer weiteren bügelseitigen Verbindung eines Glases für das rechte Auge und
- Figur 6: einen Teilschnitt durch die bügelseitige Verbindung gemäß Figur 5.

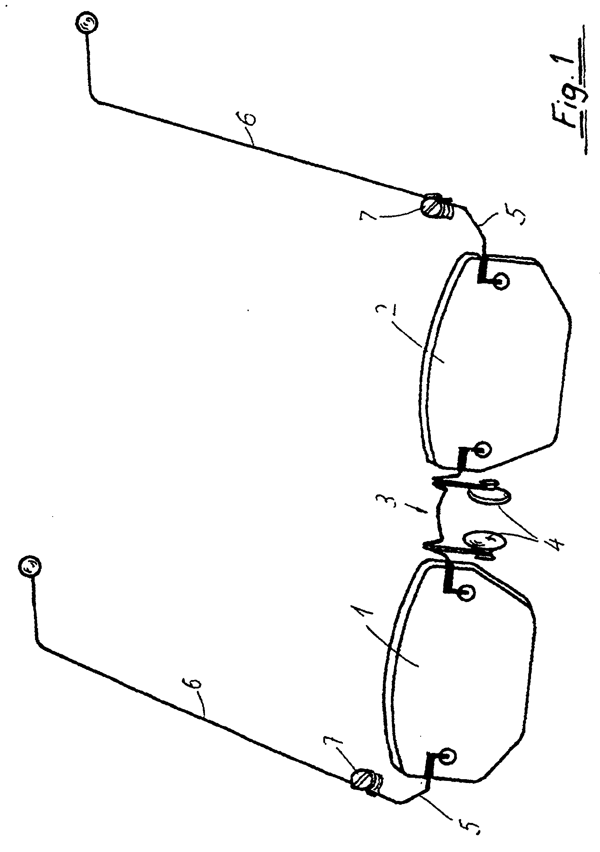

Aus Figur 1 ist, perspektivisch dargestellt, eine erste Ausführungsform der erfindungsgemäßen Brille ersichtlich. Diese umfaßt die beiden Gläser 1 und 2, wobei das Glas 1 das dem rechten Auge zuzuordnende Glas darstellt. Die beiden Gläser 1, 2 sind durch ein Brückenelement 3 unmittelbar miteinander verbunden. Des weiteren sind an die beiden Gläser 1, 2 Halteelemente 5 unmittelbar angeschlossen, an welche jeweils wiederum ein Bügel 6 mittels eines Scharnieres 7 klappbar angeschlossen ist.

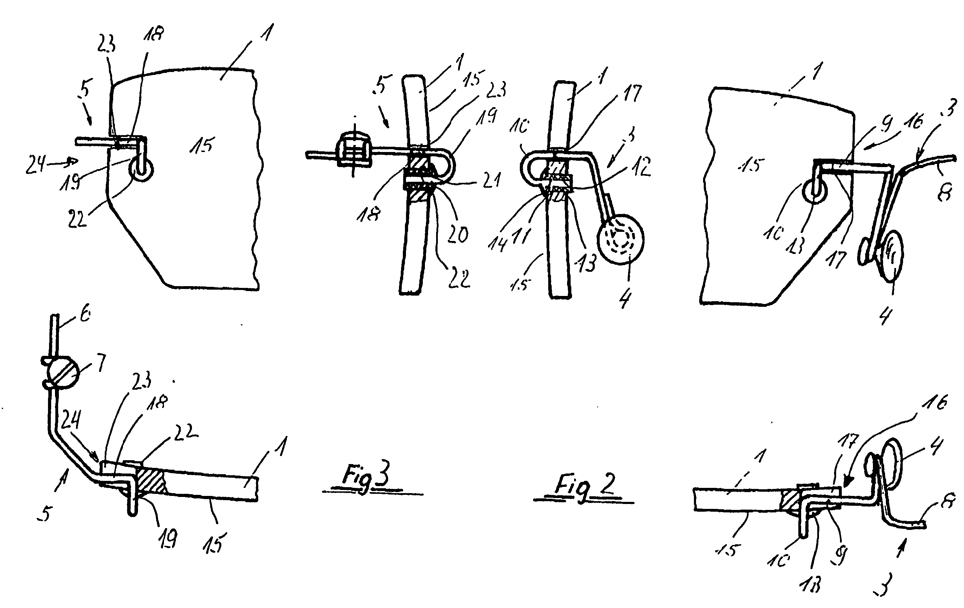

Die Verbindung des Brückenelementes 3 mit dem Glas 1 ist exemplarisch auch für die Verbindung mit dem Glas 2 anhand der Darstellungen der Figur 2 näher erläutert.

Das Brückenelement 3 weist einen Brückenabschnitt 8 auf, an den sich jeweils ein nach unten gerichteter und danach wieder nach oben gerichteter Drahtabschnitt anschließt. Im Wendebereich ist das Nasenauflageelement 4 festgelegt. Anschließend ist der Draht etwa in Höhe des Brückenabschnittes 8 erneut abgewinkelt und bildet den ersten Halteabschnitt 9. Der Draht ist daran anschließend wiederum um etwa 90° abgewinkelt und verläuft von dort aus erneut abgewinkelt mit dem Bogenabschnitt 10. Dieser geht in den ersten Zapfenabschnitt 11 über. Der erste Zapfenabschnitt 11 verläuft ebenfalls etwa rechtwinkelig zum Halteabschnitt 9, so daß er den ersten Halteabschnitt 9 mit Abstand rechtwinkelig kreuzt. In dem nasenseitigen Randbereich 16 des ersten Glases 1 ist eine erste Durchgangsbohrung 12 vorgesehen, welche sich durch die Dicke des ersten Glases 1 hindurch erstreckt. In diese erste Durchgangsbohrung 12 ist eine erste Hülse 13 eingesetzt und beispielsweise mit dem ersten Glas 1 verklebt. Die erste Hülse 13 kann auch zusätzlich eine auf der Vorderseite 15 des ersten Glases 1 anliegende, linsenförmige Verdickung aufweisen. Das Brückenelement 3 ist mit dem dem ersten Glas 1 zugehörigen ersten Zapfenabschnitt 11 in die Hülsenbohrung 14 eingeführt und in dieser beispielsweise mittels eines Klebers festgelegt. Ausgehend von dem nasenseitigen Randbereich 16 ist in das erste Glas 1 ein Schlitz 17 eingearbeitet, der geringfügig größer ist als der Durchmesser des das Brückenelement 3 bildenden Drahtes. Das Brückenelement 3 ist mit seinem ersten Halteabschnitt 9 in diesem ersten Schlitz 17 nicht festgelegt, so daß eine Flexibilität der Verbindung in diesem Bereich gegeben ist. Das heißt, daß bei Belastung des ersten Glases 1 auf der Vorderseite 15 eine freie Bewegung zwischen dem ersten Halteabschnitt 9 und dem ersten Glas 1 im Bereich des ersten Schlitzes 17 möglich ist. Andererseits übernimmt der erste Halteabschnitt 9 Belastungen, die vertikal auf die Schmalseite des ersten Glases 1 von oben einwirken. Der erste Halteabschnitt 9 des Brückenelementes 3 trägt also das erste Glas 1 aktiv mit, da sich die Ränder des Schlitzes 17 des ersten Glases 1 an dem ersten Halteabschnitt 9 abstützen können. Die Verbindung des Brückenelementes 3 mit dem zweiten Glas 2 entspricht der zuvor beschriebenen bezüglich des ersten Glases 2. Ferner ist noch erkennbar, daß der erste Schlitz 17 mit Abstand zur ersten Durchgangsbohrung 12 angeordnet ist. Er ist im wesentlichen horizontal ausgerichtet, so daß er bei einer gedachten Verlängerung in Richtung auf das zweite Glas 2, dieses schneiden oder kreuzen würde.

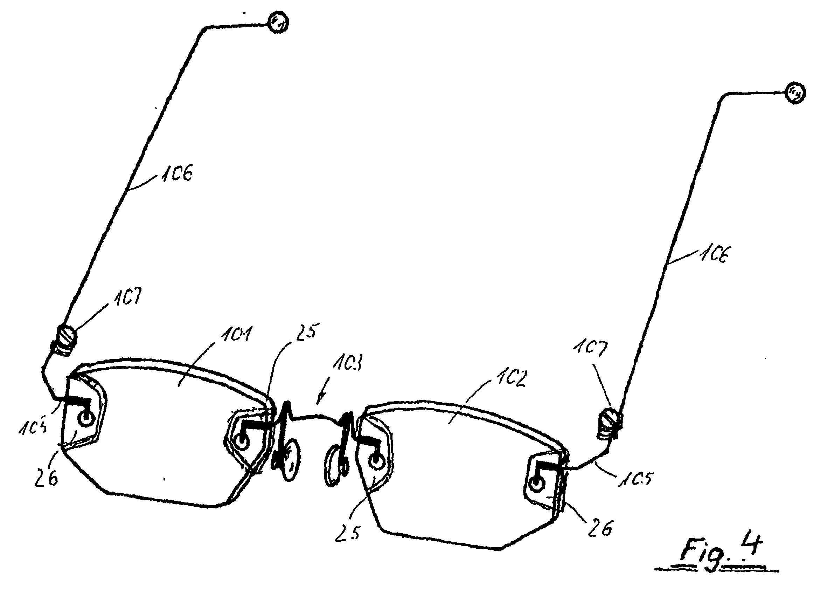

Die in Figur 3 dargestellte Verbindung zwischen dem Halteelement 5 und dem Bügel 6 mit der dieser an das erste Glas 1 angeschlossen ist, entspricht der zuvor im Zusammenhang mit dem Brückenelement 3 beschriebenen Ausgestaltung.

Das Halteelement 5, an das mittels des Scharniers 7 der Bügel 6 angeschlossen ist, besitzt einen ausgehend vom Scharnier 7 zweifach in einer Ebene abgewinkelten Bereich, der mit dem zweiten Halteabschnitt 18 endet. Ausgehend vom zweiten Halteabschnitt 18 ist das aus einem Draht geformte Halteelement rechtwinkelig in der Ebene verbleibend abgewinkelt. Hieran ist der zweite Zapfenabschnitt 20 mittels eines zweiten Bogenabschnittes 19 angeschlossen. Der zweite Zapfenabschnitt 20 verläuft im Verhältnis zum zweiten Halteabschnitt 18 so, daß er diesen mit Abstand rechtwinkelig kreuzt. Passend hierzu sind im ersten Glas 1 im Bereich des bügelseitigen Randbereiches 24 eine zweite Durchgangsbohrung 21, die durch die Dicke des Glases 1 hindurch verläuft, und ein zweiter Schlitz 23, der parallel zum ersten Schlitz 17 verläuft, angeordnet. In die zweite Durchgangsbohrung 21 ist eine zweite Hülse 22, die der ersten Hülse 13 entspricht, eingesetzt. Diese ist ebenfalls mit dem ersten Glas 1 im Bereich der zweiten Durchgangsbohrung 21 verklebt. Die zweite Hülse 22 besitzt ebenfalls eine Hülsenbohrung, in welcher das Halteelement 5 mit dem zweiten Zapfenabschnitt 20 einsitzt und mit dieser mittels Klebung oder Reib- oder Formschluß verbunden ist.

In dem im Abstand zur zweiten Durchgangsbohrung 21 angeordneten Schlitz 23 ist das Halteelement 5 mit geringem Spiel zu den Rändern des zweiten Schlitzes 23 aufgenommen, so daß auch der zweite Halteabschnitt 18 aktiv das Glas 1 trägt, jedoch um eine Achse, die parallel zur Achse des Scharnieres 7 angeordnet ist, eine flexible Einstellung bzw. Verformung des Halteelementes 5 erlaubt, das ebenfalls aus einem dünnen flexiblen Draht hergestellt ist. Der zweite zuzuordnende Bügel ist durch ein weiteres entsprechendes Halteelement und in entsprechender Weise mit dem zugehörigen zweiten Glas verbunden.

Die Figur 4 zeigt eine Darstellung einer Brille, bei der in Abwandlung zu Figur 1 das Brückenelement 103 bzw. die beiden Halteelemente 105, die nur spiegelverkehrt gestaltet sind, mit den zugehörigen Gläsern 101, 102 nicht unmittelbar, sondern unter Zwischenschaltung von ersten und zweiten Randfassungselementen 25, 26 verbunden sind. Die Durchgangsbohrungen, die im Zusammenhang mit den Figuren 2 und 3 zur Festlegung des Brückenelementes und des Halteelementes beschrieben wurden und die dazu gehörenden Schlitze sind bei der Ausführungsform gemäß Figur 4 nicht den Gläsern 101 bzw. 102 unmittelbar zugeordnet, sondern den ersten und zweiten Randfassungselemten 25 bzw. 26. Die in Figur 4 dargestellten ersten und zweiten Randfassungselemente 25, 26 können auch miteinander so verbunden sein, daß jeweils das zugehörige Glas 101, 102 an seinem Rand umlaufend oder zumindest in Bezug auf den oberen oder unteren Rand umfaßt wird.

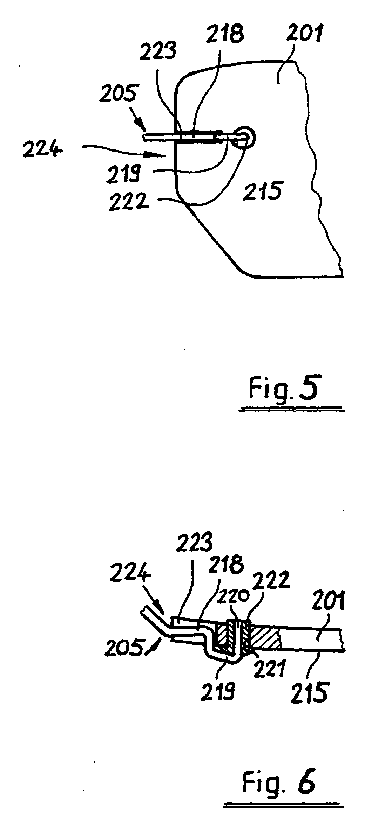

Die Figuren 5 und 6 zeigen ein weiteres Ausführungsbeispiel einer bügelseitigen Verbindung. Bauteile, die mit Bauteilen der Figur 3 übereinstimmen, sind mit Bezugszeichen versehen, die um den Wert 200 erhöht sind, und dort beschrieben. Die Verbindung unterscheidet sich von der Verbindung gemäß Figur 3 dahingehend, daß die gedachte Verlängerung des zweiten Halteabschnitts 218 den zweiten Zapfenabschnitt 220 schneidet.

### Bezugszeichenliste

- 1, 101, 201: erstes Glas
- 2, 102, 202: zweites Glas
- 3, 103: Brückenelement
- 4: Nasenauflageelement
- 5, 105, 205: Halteelement
- 6, 106: Bügel
- 7, 107: Scharnier
- 8: Brückenabschnitt
- 9: erster Halteabschnitt
- 10: erster Bogenabschnitt
- 11: erster Zapfenabschnitt
- 12: erste Durchgangsbohrung
- 13: erste Hülse
- 14: Hülsenbohrung
- 15, 215: Vorderseite des Glases
- 16: nasenseitiger Randbereich
- 17: erster Schlitz
- 18, 218: zweiter Halteabschnitt
- 19, 219: zweiter Bogenabschnitt
- 20, 220: zweiter Zapfenabschnitt
- 21, 221: zweite Durchgangsbohrung
- 22, 222: zweite Hülse
- 23, 223: zweiter Schlitz
- 24, 224: bügelseitiger Randbereich
- 25: erstes Randfassungselement
- 26: zweites Randfassungselement

## Patentansprüche

1. Brille mit
- zwei Gläsern (1, 2, 101, 102, 201, 202),
- einem die beiden Gläser (1. 2, 101, 102, 201, 202) verbindenden Befestigungselement in Form eines Brückenelements (3, 103),
- je Glas (1, 2, 101, 102, 201, 202) einem Befestigungselement in Form eines Halteelements (5, 105, 205) und einem an das Halteelement (5) angeschlossenen Bügel (6, 106),
wobei zumindest ein Befestigungselement (3, 103, 5, 105, 205) einen Zapfenabschnitt (11, 20, 220) und zum Zapfenabschnitt (11, 20, 220) einen Halteabschnitt (9,18, 218) aufweist und
wobei die Gläser (1, 2, 201, 202) oder mit den Gläsern (101, 102) verbundene Randfassungselemente (25) für das Befestigungselement eine Durchgangsbohrung (12, 21, 221) zur Aufnahme des Zapfenabschnittes (11, 20, 220) aufweisen,
**dadurch gekennzeichnet,**
**daß** der Zapfenabschnitt (11, 20, 220) den zugehörigen Halteabschnitt (9, 18, 218) mit Abstand kreuzend oder eine gedachte Verlängerung des zugehörigen Hatteabschnitts (9, 18, 218) schneidend verlaufend angeordnet ist und
**daß** die Gläser (1, 2, 201, 202) oder mit den Gläsern (101, 102) verbundene Randfassungselemente (25) einen vom Randbereich (16, 24, 224) des Glases (1, 2, 201, 202) oder des Randfassungselementes (25) ausgehenden, korrespondierend zum zugehörigen Halteabschnitt (9, 18, 218) angeordneten und zur Aufnahme desselben dienenden Schlitz (17, 22, 222) aufweisen.

2. Brille nach Anspruch 1,
**dadurch gekennzeichnet,**
**daß** das Befestigungselement (5, 105, 205; 3, 103) aus einem Draht hergestellt ist und der Zapfenabschnitt (20, 220) und der Halteabschnitt (18, 218) durch entsprechend gebogene Abschnitte des Drahtes gebildet sind.

3. Brille nach Anspruch 1,
**dadurch gekennzeichnet,**
**daß** der Birgel (6, 106) mit dem Befestigungselement in Form eines Halteelements (5, 105, 205) durch ein Scharnier (7, 107) verbunden oder einstückig mit diesem ausgebildet ist.

4. Brille nach Anspruch 1,
**dadurch gekennzeichnet,**
**daß** das Befestigungselement in Form eines Halteelements als Formteil gestaltet ist, dem der Zapfenabschnitt und ein Halteabschnitt in Form eines Steges angeformt sind.

5. Brille nach Anspruch 1,
**dadurch gekennzeichnet,**
**daß** jeder Schlitz (17, 23, 223) derart verläuft, daß eine gedachte Verlängerung des jeweiligen Schlitzes (17, 23, 223) über das zugehörige Glas (1, 2, 101, 102, 201, 202) oder die zugehörigen Randfassungselemente (25, 26) hinaus zum anderen Glas (2, 1, 102, 101, 201, 202) oder zu dessen Randfassungselementen (25, 26) hin, diese schneidet oder kreuzt.

6. Brille nach Anspruch 1 oder 5,
**dadurch gekennzeichnet,**
**daß** alle Schlitze (17, 23, 223) parallel zueinander verlaufen.

7. Brille nach einem der Ansprüche 1 bis 6,
**dadurch gekennzeichnet,**
**daß** jeweils zwischen einem Zapfenabschnitt (11, 20, 220) und der zugehörigen Durchgangsbohrung (12, 21, 221) eine Hülse (13, 22, 222) angeordnet ist.

8. Brille nach Anspruch 1,
**dadurch gekennzeichnet,**
**daß** der Zapfenabschnitt (11, 20, 220) in der zugehörigen Durchgangsbohrung (12, 21, 221) mittels eines Klebers festgesetzt ist.

9. Brille nach Anspruch 8,
**dadurch gekennzeichnet,**
**daß** die Hülse (13, 22, 222) in der zugehörigen Durchgangsbohrung (12, 21, 221) mit Preßsitz oder mittels eines Klebers festgelegt ist.

10. Brille nach Anspruch 8,
**dadurch gekennzeichnet,**
**daß** der Zapfenabschnitt (11, 20, 220) in der zugehörigen Hülse (13, 22, 222) mittels eines Klebers festgelegt ist.

11. Brille nach Anspruch 2,
**dadurch gekennzeichnet,**
**daß** der Draht ein Runddraht ist.

12. Brille nach Anspruch 2,
**dadurch gekennzeichnet,**
**daß** der Draht aus Titan oder einem Titan enthaltenden Material hergestellt ist.

13. Brille nach Anspruch 2,
**dadurch gekennzeichnet,**
**daß** der Draht zumindest partiell beschichtet oder umhüllt oder mit unterschiedlichen Farbaufträgen versehen ist.

14. Brille nach Anspruch 1,
**dadurch gekennzeichnet,**
**daß** der Zapfenabschnitt (11, 20) von der Vorderseite (15) des Glases (1, 2, 101, 102) oder des jeweiligen Randfassungselementes (25, 26) in die zugehörige Durchgangsbohrung (12, 21) eingeführt ist.

## Claims

1. Spectacles comprising
- two spectacle lenses (1, 2, 101, 102, 201, 202),
- an attachment element in form of a bridge element (3, 103) connecting the two spectacle lenses (1, 2, 101, 102, 201, 202),
- for each spectacle lens (1, 2, 101, 102, 201, 202) an attachment element in form of a holding element (5, 105, 205) and a spectacle side (6, 106) connected to the holding element (5),
wherein at least one attachment element (3, 103, 5, 105, 205) has a journal portion (11, 20, 220) and towards the journal portion (11, 20, 220) a holding portion (9, 18, 218), and
wherein the spectacle lenses (1, 2, 201, 202) or edge framing elements (25) connected to the spectacle lenses (101, 102) have for the attachment element a through bore (12, 21, 221) for accommodating the journal portion (11, 20, 220),
**characterised in that**
the journal portion (11, 20, 220) extends such, that it intersects with a distance the corresponding holding portion (9, 18, 218) or intersects an imaginary extension of the corresponding holding portion (9, 18, 218) and
that the spectacle lenses (1, 2, 201, 202) or edge framing elements (25) connected to the spectacle lenses (101, 102) have a slot (17, 22, 222) extending from the edge portion (16, 24, 224) of the spectacle lens (1, 2, 201, 202) or of the edge framing element (25) and arranged corresponding to the corresponding holding portion (9, 18, 218) and serving for accommodating the holding portion (9, 18, 218).

2. Spectacles according to claim 1,
**characterised in that**
the attachment element (5, 105, 205; 3, 103) is made from a wire and the journal portion (20, 220) and the holding portion (18, 218) are formed by portions of the wire bent accordingly.

3. Spectacles according to claim 1,
**characterised in that**
the spectacle side (6, 106) is connected to the attachment element in form of a holding element (5, 105, 205) by a hinge (7, 107) or is formed integrally with the holding element (5, 105, 205).

4. Spectacles according to claim 1,
**characterised in that**
the attachment element in form of a holding element is constructed as a moulded part on which the journal portion and a holding portion in form of a web are formed-on.

5. Spectacles according to claim 1,
**characterised in that**
each slot (17, 23, 223) extends such, that an imaginary extension of the respective slot (17, 23, 223) beyond the corresponding spectacle lens (1, 2, 101, 102, 201, 202) or beyond the corresponding edge framing elements (25, 26) towards the other spectacle lens (2, 1, 102, 101, 201, 202) or towards the edge framing elements (25, 26) of the other spectacle lens (2, 1, 102, 101, 201, 202) intersects or crosses this other spectacle lens (2, 1, 102, 101, 201, 202).

6. Spectacles according to claim 1 or 5,
**characterised in that**
all slots (17, 23, 223) extend parallel to each other.

7. Spectacles according to one of claims 1 to 6,
**characterised in that**
respectively, between a journal portion (11, 20, 220) and the corresponding through bore (12, 21, 221) a sleeve (13, 22, 222) is arranged.

8. Spectacles according to claim 1,
**characterised in that**
the journal portion (11, 20, 220) is fixed in the corresponding through bore (12, 21, 221) by an adhesive.

9. Spectacles according to claim 8,
**characterised in that**
the sleeve (13, 22, 222) is fixed in the corresponding through bore (12, 21, 221) by means of clamping or by means of an adhesive.

10. Spectacles according to claim 8,
**characterised in that**
the journal portion (11, 20, 220) is fixed in the corresponding sleeve (13, 22, 222) by means of an adhesive.

11. Spectacles according to claim 2,
**characterised in that**
the wire is a round wire.

12. Spectacles according to claim 2,
**characterised in that**
the wire is made from titanium or a material containing titanium.

13. Spectacles according to claim 2,
**characterised in that**
the wire is at least partially coated or sheathed or is provided with different colour coatings.

14. Spectacles according to claim 1,
**characterised in that**
the journal portion (11, 20) is inserted from the front side (15) of the spectacle lenses (1, 2, 101, 102) or of the respective edge framing element (25, 26) into the corresponding through bore (12, 21).

## Revendications

1. Lunettes, avec
- deux verres (1, 2, 101, 102, 201, 202)
- un élément de fixation sous la forme d'un élément en arcade (3, 103) reliant les deux verres (1, 2, 101, 102, 201, 202),
- pour chaque verre (1, 2, 101, 102, 201, 202), un élément de fixation sous la forme d'un élément de maintien (5, 105, 205) et une branche (6, 106) raccordée sur l'élément de maintien (5),
au moins un élément de fixation (3, 103, 5, 105, 205) comportant un tronçon formant cheville (11, 20, 220) et un tronçon de maintien (9, 18, 218) vers l'élément formant cheville (11, 20, 220) et
les verres (1, 2, 201, 202) ou des éléments de monture (25) pour l'élément de fixation qui sont reliés aux verres (101, 102) comportant un alésage traversant (1, 21, 221) pour réceptionner le tronçon formant cheville (11, 20, 220),
**caractérisé en ce que**
le tronçon formant cheville (11, 20, 220) est disposé de façon à croiser le tronçon de maintien associé (9, 18, 218) à une certaine distance ou de façon à recouper un prolongement virtuel du tronçon de maintien associé (9, 18, 28) et
**en ce que** les verres (1, 2, 201, 202) ou des éléments de monture (25) reliés aux verres (101, 102) comportent une fente (17, 22, 222) partant de la zone de bordure (16, 24, 224) du verre (1, 2, 201, 202) ou de l'élément de monture (25), disposée en correspondance avec le tronçon de maintien associé (9, 18, 218) et destinée à réceptionner ce dernier.

2. Lunettes selon la revendication 1,
**caractérisées en ce que**
l'élément de fixation (5, 105, 205 ; 3, 103) est fabriqué en un fil métallique et **en ce que** le tronçon formant cheville (20, 220) et le tronçon de maintien (18, 218) sont formés par des tronçons courbés en conséquence du fil métallique.

3. Lunettes selon la revendication 1,
**caractérisées en ce que** la branche (6, 106) est reliée à l'élément de fixation sous forme d'un élément de maintien (5, 105, 205) par une charnière (7, 107) ou est **en ce qu'**elle est conçu en monobloc avec ce dernier.

4. Lunettes selon la revendication 1,
**caractérisées en ce que** l'élément de fixation sous la forme d'un élément de maintien est conçu en tant qu'une pièce moulée, sur laquelle le tronçon formant cheville et le tronçon de maintien sont moulés sous la forme d'une barrette.

5. Lunettes selon la revendication 1,
**caractérisées en ce que** chaque fente (17, 23, 223) s'étend de façon à ce qu'un prolongement virtuel de la fente respective (17, 23, 223) en passant par-dessus le verre associé (1, 2, 101, 102, 201, 202) ou les éléments de monture associés (25, 26) jusque vers l'autre verre (1, 2, 102, 101, 201, 202) ou vers la monture de ce dernier (25, 26) les recoupe ou les croise.

6. Lunettes selon la revendication 1 ou 5,
**caractérisées en ce que** toutes les fentes (17, 23, 223) sont réciproquement parallèles.

7. Lunettes selon l'une quelconque des revendications 1 à 6,
**caractérisées en ce qu'**une douille (13, 22, 222) est respectivement disposée entre un tronçon formant cheville (11, 20 220) et l'alésage traversant associé (12, 21, 221).

8. Lunettes selon la revendication 1,
**caractérisées en ce que** le tronçon formant cheville (11, 20 220) est fixé dans l'alésage traversant associé (12, 21, 221) au moyen d'une colle.

9. Lunettes selon la revendication 8,
**caractérisées en ce que** la douille (13, 22, 222) est fixée dans l'alésage traversant associé (12, 21, 221) par ajustage forcé ou au moyen d'une colle.

10. Lunettes selon la revendication 8,
**caractérisées en ce que** le tronçon formant cheville (11, 20, 220) est fixé dans la douille associée (13, 22, 222) au moyen d'une colle.

11. Lunettes selon la revendication 2,
**caractérisées en ce que** le fil métallique est un fil rond.

12. Lunettes selon la revendication 2,
**caractérisées en ce que** le fil métallique est fabriqué en titane ou en matériau contenant du titane.

13. Lunettes selon la revendication 2,
**caractérisées en ce que** le fil métallique est au moins partiellement revêtu ou enrobé ou muni de différentes applications de couleurs.

14. Lunettes selon la revendication 1,
**caractérisées en ce que** le tronçon formant cheville (11, 20) est introduit dans l'alésage traversant associé (12, 21) à partir de la face avant (15) du verre (1, 2, 101, 102) ou de l'élément de monture respectif (25, 26).
